# EUROPEAN PATENT SPECIFICATION

(11) **EP 1 251 036 B1**
(45) Date of publication and mention of the grant of the patent: **20.07.2005**
(21) Application number: 02008571.8
(22) Date of filing: 16.04.2002
(51) Int. Cl.: B60R 16/02

(54) **Wire harness**
Kabelbaum
Faisceau de cables

(30) Priority: 16.04.2001 JP 2001117060
(43) Date of publication of application: 23.10.2002
(73) Proprietor: AUTONETWORKS TECHNOLOGIES, LTD., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Miyamukai, Takamichi, c/oAutoNetworks Techn. Ltd., Nagoya-shi, Aichi (JP)
(74) Representative: Winter, Brandl, Fürniss, Hübner, Röss, Kaiser, Polte Partnerschaft Patent- und Rechtsanwaltskanzlei

(56) References cited:
- EP-A- 0 648 643
- EP-A- 1 020 876
- PATENT ABSTRACTS OF JAPAN vol. 1999, no. 14, 22 December 1999 (1999-12-22) & JP 11 260151 A (SUMITOMO WIRING SYST LTD), 24 September 1999 (1999-09-24)
- PATENT ABSTRACTS OF JAPAN vol. 1997, no. 12, 25 December 1997 (1997-12-25) & JP 09 204940 A (FUJIKURA LTD), 5 August 1997 (1997-08-05)

## Description

### BACKGROUND OF THE INVENTION

The present invention relates to a wire harness for use in a car according to the preamble of claim 1. Such wire harnesses are well known in the prior art, see, only as an example, document EP-A-0 648 643. According to the invention, the wire harness includes a medium which stores therein recycling electronic data necessary when scrapping a used car and recycling parts carried on the used car.

A used car is scrapped according to the following steps of:
(1) extracting gasoline;
(2) removing tires;
(3) extracting liquids;
(4) removing recyclable parts;
(5) removing expensive materials;
(6) mashing the used car;
(7) crushing the used car using a crusher; and,
(8) selecting metals.

That is, when scrapping a used car, the liquids and toxic substances thereof are removed (extraction of liquids) from the used car, and the recyclable parts and expensive materials are removed (removal of the recyclable parts and expensive materials); next, the used car is crushed using a shredder; and, after which, the crushed pieces are separated into iron, nonferrous metal, and shredder dust.

Recently, triggered by an environmental problem, there has been an increasing need for reduction in the quantity of the shredder dust and, in order to facilitate the effective use of resources, there has been increasing the need for collection of the high-quality scrap iron and nonferrous metal.

In the case of a car, recently, with the more and more enhanced function of the car and with the increased kind and number of electronic equipment to be carried on the car, the wire harnesses to be incorporated into the car has increased in number.

And, since the wire harness is arranged over the whole car body, it is difficult to remove the wire harness from the car body. Therefore, in most cases, the wire harness is mashed together with the car body and is then crushed using a shredder. However, the wire harness is composed of a plurality of wires, terminals and connectors and tape for binding the wires together and thus, in case where the wire harness is mashed together with the car body and is then crushed using a shredder, nonferrous metals used in the conductors of the wires, terminals and connectors are mixed into the iron materials of the car body, which makes it difficult to collect the scrap iron of high quality.

To collect the scrap iron of high quality, in a stage prior to the mashing step, it is effective to separate and remove the nonferrous materials, especially, nonferrous metals such as copper and copper alloys used in the wire harness as much as possible.

In view of this, the wire harness is removed from the used car prior to execution of the car mashing step. However, in this case, after removal of the wire harness, as a next stage, it is necessary to process the thus taken-out wire harness.

In the processing of the wire harness, preferably, separately from the scrapped materials obtained by mashing the car body, the wire harness may be crushed using a shredder, and the copper and copper alloys used as the wire conductors may be separated from the other materials such as plastic materials (dust); and, after which, the copper and copper alloys may be recycled as copper products, whereas the dust may be thermally recycled.

The nonferrous metal materials such as the conductors of the wires and the plastic materials such as the materials of the wire covers and tape, both of which cooperate together in forming the wire harness, can be separated from each other using a difference in the specific gravity between them.

However, in case where the nonferrous metal mixture of copper and copper alloys contains a given or more quantity of zinc and nickel, the mixture cannot be used as the raw material for the wire conductors. Also, the plastic materials contain thermally recyclable materials and thermally unrecyclable materials and, therefore, the plastic materials cannot be processed uniformly.

In case where the plastic materials are separated into the thermally recyclable materials and thermally unrecyclable materials, the thermally recyclable materials and thermally unrecyclable materials can be processed properly. However, in the case of the wire harness that is taken out from a used car, normally, it is very difficult to separate the plastic materials into the thermally recyclable materials and thermally unrecyclable materials.

The wire cover materials and tape can be manufactured in such a manner that they can be distinguished by coloring or by marking (such as characters or bar codes) and, therefore, they can be manufactured while they are displayed by coloring or by marking, so that it is possible to distinguish whether they are the thermally recyclable materials or the thermally unrecyclable materials. However, even in this case, since the wire harness used in the used car is soiled with oil, mud and dust, it is normally difficult to distinguish between the thermally recyclable materials and the thermally unrecyclable materials by coloring or by marking.

### SUMMARY OF THE INVENTION

The present invention aims at eliminating the drawbacks found in the above-mentioned conventional wire harness. Accordingly, it is an object of the invention to provide a wire harness which, even in case where it is incorporated into a used car, is easy to distinguish between the contents of the component materials thereof and allows a recycling process suitable for the respective component materials.

In attaining the above object, according to the invention, there is provided a wire harness including a medium, such as for example an IC tag of a non-contact type, storing therein electronic data necessary for recycling of the contents of materials forming the wire harness.

### DETAILED DESCRIPTION OF THE PREFERRED EMBODIMENTS

In a wire harness according to the invention, even at the time when it is removed from a used car, in the case of a set of wire harnesses, data necessary for a recycling process of the wire harnesses can be obtained easily and, based on the thus obtained data, for example, the materials of the wire harnesses can be separated by the thermally recyclable material contents, and a proper recycling process can be selectively enforced on each of the thus separated materials.

As the data that are necessary for the recycling process, for example, there can be pointed out the following data:
that is,
(1) the weight of the whole wire harness;
(2) the weight of the wires;
(3) the weight of metal materials and contents thereof (copper, copper alloys and so on); and,
(4) the weight and kind of non-metal materials (such as plastic materials) as well as the contents thereof (the rates of the contents of thermally recyclable plastic materials).

Such data, in a stage where wire harnesses are designed, can be obtained for each of the product numbers of the wire harnesses, and, after the thus obtained data are converted into electronic data, they can be input into the medium.

By the way, the above data can be used in the following manner.

That is, from the data on the above items (1) - (2), the weight of the connectors and tape of the wire harness except the wires thereof can be obtained.

In case where the contents of copper, copper alloys and other metal materials are found from the item (3), the materials can be separated according to the contents thereof, and can be processed while they are combined together in such a manner that the contents of other metal materials than copper and copper alloys are set at values equal to or less than the limit that allows the other metal materials to be used as the raw materials for the wire conductors.

According to the item (4), for example, according to the contents of thermally recyclable materials, the materials of the wire harness can be separated. Thanks to this, within the thermal recycling allowable range, the thermally recyclable materials can be thermally recycled as much as possible, which makes it possible to reduce the plastic dust.

As the medium into which there can be input the data necessary for the above-mentioned recycling process, for example, there can be used an IC tag of a non-contact type, specifically, a Tag-it^{TW} smart label (manufactured by Nippon Texas Instrument, Inc.).

A method for mounting the medium such as the IC tag of a non-contact type with the data necessary for the recycling process stored therein onto the wire harness is not limited to a specific method but, for example, there can be used a method in which the medium is previously attached to a wire bundle and the tape is wound on the medium to thereby fix the medium to the wire harness.

In the case of a wire harness removed from a used car, the information previously input in the IC tag of a non-contact type can be taken out by a reader using wireless communication in a non-contact manner. Therefore, as described above, in case where the data necessary for the recycling process are previously input in the medium, it is easy that the data are read out and the materials of the wire harness are separated according to the contents of the thermally recyclable materials.

Also, a reader may also be disposed in a separating machine. In this case, the wire harness materials can be separated automatically, or, based on the data that are obtained from the reader, the wire harness materials can be separated by hand.

In case where the wire harness materials are previously separated in accordance with the data necessary for the recycling process, a proper recycling process can be selectively carried out on each of the thus separated groups.

According to the wire harness of the invention, since the medium with the electronic data necessary for recycling input therein is mounted on the wire harness, even at the time when the wire harnesses are removed from the used car, for each set of wire harnesses, the data necessary for the recycling process are easily obtained and thus, based on the thus obtained data, the materials of the wire harnesses can be separated. Thus, for each of the separated material groups, a proper recycling process can be enforced selectively.

## Claims

1. A wire harness comprising:
a plurality of wires,
terminals,
connectors and
tapes for binding said wires, **characterised in that**, the wire harness further comprises
a medium with electronic data necessary for recycling of said wire harness, said medium being stored in said wire harness.

2. The wire harness according to claim 1, **characterised in that**, said medium is an IC tag of a non-contact type.

## Patentansprüche

1. Ein Kabelbaum mit:
einer Mehrzahl von Drähten;
Anschlüssen;
Verbindern; und
Bändern zum Zusammenbinden der Drähte, **dadurch gekennzeichnet, dass**
der Kabelbaum weiterhin ein Medium mit elektronischen Daten aufweist, welche zum Recyclen des Kabelbaums notwendig sind, wobei das Medium in dem Kabelbaum aufgenommen ist.

2. Der Kabelbaum nach Anspruch 1, **dadurch gekennzeichnet, dass** das Medium ein kontaktloses IC-Etikett ist.

## Revendications

1. Faisceau de câbles comprenant:
une pluralité de câbles,
des bornes,
des connecteurs, et
des bandes pour relier lesdits câbles,
**caractérisé en ce que** le faisceau de câbles comporte en outre
un milieu pourvu de données électroniques nécessaires pour le recyclage dudit faisceau de câbles, ledit milieu étant rangé dans ledit faisceau de câbles.

2. Faisceau de câbles selon la revendication 1, **caractérisé en ce que** ledit milieu est une étiquette IC du type sans contact.
